# EUROPÄISCHE PATENTANMELDUNG

(11) **EP 1 278 048 A2**
(43) Veröffentlichungstag der Anmeldung: **22.01.2003**
(21) Anmeldenummer: 02015250.0
(22) Anmeldetag: 09.07.2002
(51) Int. Cl.: G01F 23/284, G01F 23/296

(54) **Verfahren zur Füllstandsmessung sowie Füllstandsmessgerät**

(30) Priorität: 11.07.2001 DE 10133081
(71) Anmelder: VEGA Grieshaber KG, 77709 Wolfach (DE)
(72) Erfinder: Benz, Joachim, 77756 Hausach (DE)
(74) Vertreter: Patentanwälte Westphal, Mussgnug & Partner

(57) **Zusammenfassung**

Ein Füllstandsmeßgerät sendet Meßimpulse (M) auf die Oberfläche (O) eines in einen Behälter gefüllten Füllgutes (F), von der zweite Echoimpulse (E2) unmittelbar zur Sende- und Empfangsantenne (A) des Füllstandsmeßgerätes reflektiert werden. Durch diffuse Reflexion an der Oberfläche (O) werden dritte Echoimpulse (E3) zur Behälterwand (BW) und anschließend zur Sende- und Empfangsantenne (A) reflektiert. An exponierten Stellen, z. B. an Schweißnähten (SW) der Behälterwand (BW), werden erste Echoimpulse (E1) zur Sende- und Empfangsantenne (A) reflektiert. Die von der Sende- und Empfangsantenne (A) empfangenen Echoimpulse (E1, E2, E3) werden mittels eines vorzugsweise digitalen Tiefpasses (TP) tiefpaßgefiltert und anschließend in einer Auswerteeinheit (AW) ausgewertet. Durch die Tiefpaßfilterung verschmelzen der zweite und der dritte Echoimpuls (E2, E3) zu einem Echoimpuls (EV). Das Füllstandsmeßgerät ist besonders zur Messung der Füllstandshöhe (H) festen Schüttgutes (F) geeignet.

## Beschreibung

Die Erfindung betrifft ein Verfahren zur Füllstandsmessung mittels eines Füllstandsmeßgerätes, das Meßimpulse auf die Oberfläche eines in einen Behälter gefüllten Füllgutes sendet und die von der Oberfläche des Füllgutes reflektierten Meßimpulse, die sog. Echoimpulse, empfängt, um aus der Laufzeit der Meßimpulse den Füllstand des Füllgutes im Behälter zu ermitteln.

Die Erfindung betrifft weiter ein Füllstandsmeßgerät zum Senden von Meßimpulsen auf die Oberfläche eines in einen Behälter gefüllten Füllgutes, zum Empfang der von der Oberfläche des Füllgutes reflektierten Meßimpulse, der sog. Echoimpulse, und zur Bestimmung der Laufzeit der Meßimpulse, um den Füllstand des Füllgutes im Behälter zu ermitteln.

Zur Ermittlung des Füllstandes eines in einen Behälter gefüllten Füllgutes, bei dem es sich um festes Schüttgut oder um eine Flüssigkeit handeln kann, werden Meßimpulse von einem Füllstandsmeßgerät auf die Oberfläche des Füllgutes gesendet. An der Oberfläche des Füllgutes werden die ausgesendeten Meßimpulse zurück zum Füllstandsmeßgerät reflektiert und dort von einer Empfangseinheit empfangen. Durch Messung der Laufzeiten der Meßimpulse wird der jeweils aktuelle Füllstand des Füllgutes im Behälter gemessen.

Bevorzugt werden Füllstandsmeßgeräte eingesetzt, die Ultraschallimpulse oder wie ein Radargerät elektromagnetische Impulse aussenden.

Die vom Füllstandsmeßgerät empfangenen Meßimpulse sind jedoch mit Störsignalen, z. B. Störechos, überlagert und können außerdem noch verfälscht sein. So bewirken z. B. Staub über der Oberfläche des Füllgutes und diffuse Reflexionen an der Oberfläche des Füllgutes, die beim Befüllen und Entleeren des Behälters auftreten, eine starke Dämpfung der reflektierten Meßimpulse.

Beim Messen des Füllstandes eines in einen Behälter gefüllten Füllgutes werden drei unterschiedliche sich überlagernde Echoimpulse erzeugt. Der zweite Echoimpuls wird durch direkte Reflexion des ausgesendeten Meßimpulses an der Oberfläche des Füllgutes erzeugt, der unmittelbar zur Sende- und Empfangsantenne des Füllstandsmeßgerätes reflektiert wird. Der dritte Echoimpuls wird durch diffuse Reflexion des Meßimpulses an der Oberfläche des Füllgutes und anschließende Reflexion, teilweise auch mehrfache Reflexion, an der Behälterwand gebildet und schließlich entsteht der erste Echoimpuls durch Reflexion des ausgesendeten Meßimpulses an der Behälterwand, z. B. an Schweißnähten, Nieten, Schrauben oder dergleichen.

Eine genaue Messung der Füllstandshöhe von Schüttgut wird durch die Tatsache, daß die Amplitude des zweiten Echoimpulses - also der unmittelbar von der Oberfläche des Schüttgutes zur Sende- und Empfangsantenne reflektierte Meßimpuls - meist kleiner ist wie die Amplitude des dritten Echoimpulses - des unmittelbar von der Behälterwand zur Sende- und Empfangsantenne reflektierten Meßimpulses - weiter erschwert. Weil daher kein scharfer Meßimpuls zur Sende- und Empfangsantenne des Füllstandsmeßgerätes reflektiert wird, muß im Füllstandsmeßgerät aus dem Signalgemisch der empfangenen Echoimpulse der Füllstand des Füllgutes im Behälter ermittelt werden.

Es ist daher Aufgabe der Erfindung, trotz dieser zahlreichen störenden Einflüsse ein möglichst genaues Meßergebnis zu erzielen.

Verfahrensmäßig wird diese Aufgabe mit den im Anspruch 1 angegebenen Merkmalen dadurch gelöst, daß die empfangenen Meßimpulse mittels eines Tiefpasses gefiltert und anschließend ausgewertet werden.

Vorrichtungsmäßig wird diese Aufgabe mit den im Anspruch 15 angegebenen Merkmalen dadurch gelöst, daß der Ausgang des Empfängers mit dem Eingang eines Tiefpasses verbunden ist, an dessen Ausgang der Eingang einer Auswerteeinheit angeschlossen ist und daß der Ausgang der Auswerteeinheit mit dem Eingang einer Ausgabeeinheit verbunden ist.

Durch die erfindungsgemäße Maßnahme, das empfangene Signalgemisch mittels eines Tiefpasses zu filtern, verschmelzen der zweite und der dritte Echoimpuls - der direkt von der Oberfläche des Füllgutes zur Sende- und Empfangsantenne reflektierte und der diffus an der Oberfläche des Füllgutes zur Behälterwand und von dort zur Sende- und Empfangsantenne reflektierte Meßimpuls - zu einem einzigen Echoimpuls. Die Erfindung geht dabei von der Erkenntnis aus, daß die Amplitude des dritten Echoimpulses - des diffus an der Oberfläche des Füllgutes zur Behälterwand und von dort zur Sende- und Empfangsantenne reflektierten Meßimpulses - die Amplituden sowohl des ersten als auch des zweiten Echoimpulses deutlich übertrifft. Durch das vom Tiefpaß bewirkte Verschmelzen des zweiten und dritten Echoimpulses werden nun zwei Echoimpulse deutlich unterschiedlicher Amplitude gebildet, deren Laufzeiten sich nun wesentlich einfacher bestimmen lassen als bei dem eingangs erläuterten Signalgemisch aus drei Echoimpulsen. Eine besonders hohe Meßgenauigkeit wird erzielt, wenn nicht, wie zu erwarten, die Laufzeit des ersten Echoimpulses, sondern die des aus dem zweiten und dem dritten Echoimpuls verschmolzenen Echoimpulses gemessen wird, weil dessen Amplitude wesentlich größer ist als die des ersten Echoimpulses.

Durch Vorfiltern des von der Sende- und Empfangsantenne gelieferten Signalgemisches mittels eines Bandpasses vor dem Tiefpaß wird die Meßgenauigkeit weiter erhöht. Eine weitere Verbesserung der Meßgenauigkeit läßt sich erzielen, wenn das mittels des Bandpasses vorgefilterte Signalgemisch vor der Filterung mittels des Tiefpasses noch mittels eines Gleichrichters gleichgerichtet wird. Schließlich führt eine Analog-Digital-Wandlung des gleichgerichteten Signalgemischs mittels eines Analog-Digital-Wandlers zu einer weiteren Erhöhung der Meßgenauigkeit, weil dann anstelle eines analogen Tiefpasses ein digitaler Tiefpaß eingesetzt werden kann, womit folgende Vorteile erzielbar sind.

Je nach den Reflexionseigenschaften des Füllgutes und der Behälterwand ist es sinnvoll, die Grenzfrequenz des digitalen Tiefpasses für steigende und fallende Amplituden der zu analysierenden Echoimpulse gleich oder unterschiedlich zu wählen. Das erfindungsgemäße Verfahren und das erfindungsgemäße Füllstandsmeßgerät lassen sich daher individuell an Füllgüter und Behälter anpassen.

In der Auswerteeinheit können der zweite und der dritte Echoimpuls oder auch nur der zweite Echoimpuls ausgewertet werden. Vorzugsweise werden dabei die ansteigenden Amplituden der Echoimpulse ausgewertet.

Je nach dem Reflexionsvermögen des Füllgutes und der Behälterwand kann es sinnvoll sein, die Hüllkurven der Meßimpulse zu bilden und auszuwerten.

Die Erfindung wird anhand der Figuren nun näher beschrieben und erläutert.

In der Zeichnung zeigen:
- Figur 1: einen teilweise mit Füllgut gefüllten Behälter mit der Sende- und Empfangsantenne des Füllstandsmeßgerätes,
- Figur 2: ein Schaltbild eines Ausführungsbeispieles eines erfindungsgemäßen Füllstandsmeßgerätes,
- Figur 3: den zeitlichen Verlauf der Meßimpulse am Ausgang der Sende- und Empfangsantenne,
- Figur 4: den zeitlichen Verlauf der Meßimpulse nach Vorfilterung und Gleichrichtung,
- Figur 5: die Hüllkurven der in Figur 4 dargestellten Meßimpulse und
- Figur 6: die Hüllkurven der Meßimpulse nach der Tiefpaßfilterung am Ausgang des Tiefpasses.

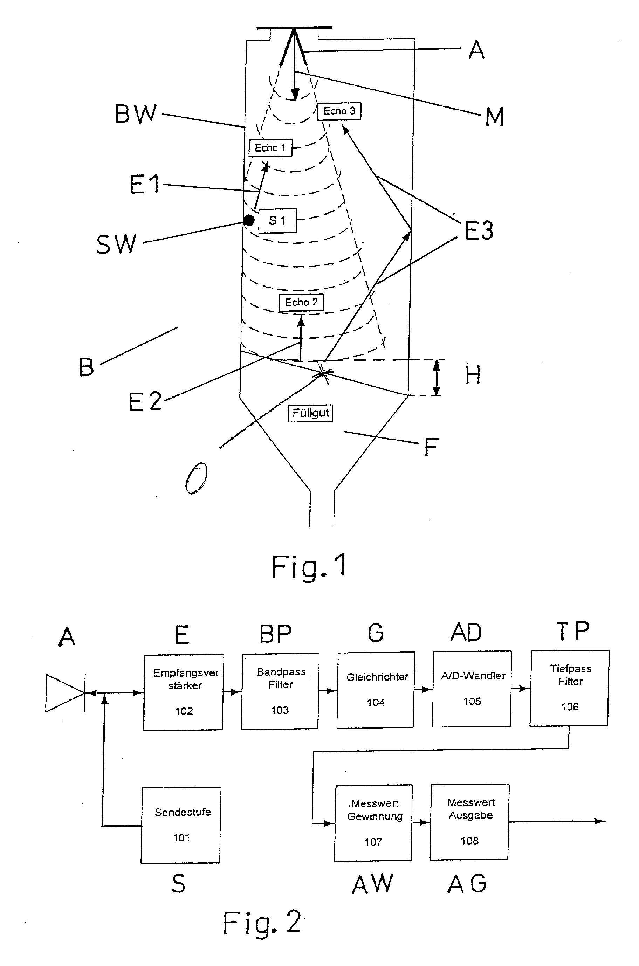

In der Figur 1 ist ein Behälter B gezeigt, an dessen oberem Ende die Sende- und Empfangsantenne A des erfindungsgemäßen Füllstandsmeßgerätes angeordnet ist. Die von der Sende- und Empfangsantenne A ausgesendeten Meßimpulse M werden zu einem Teil von der Oberfläche O des Füllgutes F als Echoimpulse E2 unmittelbar zurück zur Sende- und Empfangsantenne A reflektiert. Zu einem weiteren Teil werden die von der Sende- und Empfangsantenne A ausgesendeten Meßimpulse M diffus an der Oberfläche O des Füllgutes als Echoimpulse E3 zur Behälterwand BW und von dort zur Sende- und Empfangsantenne A reflektiert. Schließlich wird ein dritter Teil der von der Sende- und Empfangsantenne A ausgestrahlten Meßimpulse M von exponierten Stellen der Behälterwand BW, z. B. Schweißnähten SW, unmittelbar zurück zur Sende- und Empfangsantenne A reflektiert.

Figur 2 zeigt ein Schaltbild eines Ausführungsbeispieles eines erfindungsgemäßen Füllstandsmeßgerätes.

Die Sende- und Empfangsantenne A ist an den Eingang eines Empfängers E und den Ausgang eines Senders S angeschlossen. Der Ausgang des Empfängers E ist mit dem Eingang eines Bandpasses BP verbunden, dessen Ausgang an den Eingang eines Gleichrichters G angeschlossen ist. Der Ausgang des Gleichrichters G ist mit dem Eingang eines Analog-Digital-Wandlers verbunden, dessen Ausgang mit dem Eingang eines Tiefpasses TP verbunden ist. Der Ausgang des Tiefpasses ist an den Eingang einer Auswerteeinheit AW angeschlossen, deren Ausgang mit dem Eingang einer Ausgabeeinheit AG verbunden ist.

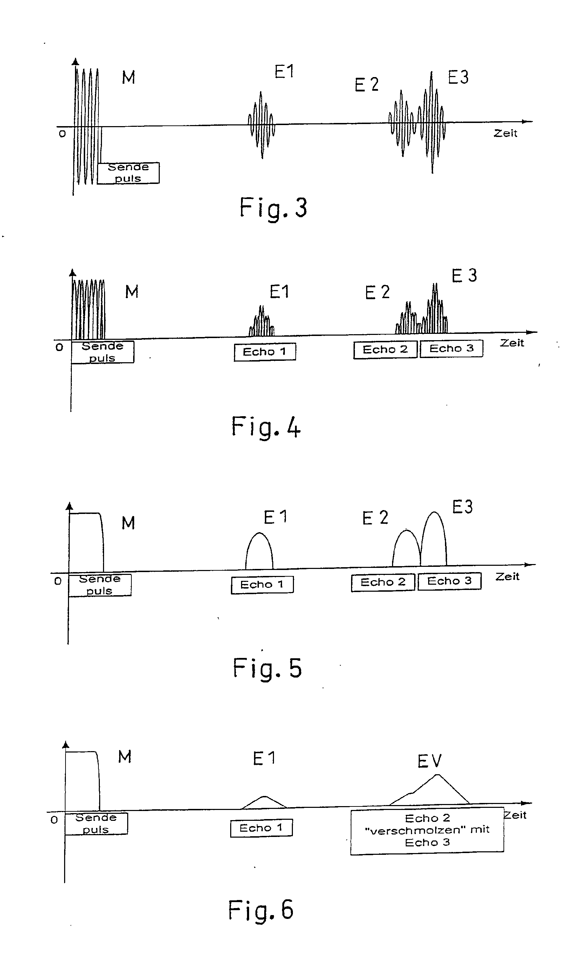

Anhand der in den Figuren 3-6 dargestellten Meßimpulsdiagramme wird das in Figur 2 abgebildete Ausführungsbeispiel eines erfindungsgemäßen Füllstandsmeßgerätes erläutert.

Das in Figur 3 abgebildete Impulsdiagramm zeigt den zeitlichen Verlauf des von der Sende- und Empfangsantenne A ausgesendeten Meßimpulses M sowie der von der Sende- und Empfangsantenne A empfangenen Echoimpulse E1, E2 und E3. Es ist deutlich zu erkennnen, daß die Amplitude des Echoimpulses E2, der durch unmittelbare Reflexion an einer exponierten Stelle, z. B. an einer Schweißnaht SW der Behälterwand BW, verursacht wird, etwa gleich groß ist wie die Amplitude des Echoimpulses E2, der durch unmittelbare Reflexion an der Oberfläche O des Füllgutes F erzeugt wird. Dagegen ist die Amplitude des Echoimpulses E3, der durch diffuse Reflexion an der Oberfläche O des Füllgutes F und anschließende Reflexion an der Behälterwand BW gebildet wird, wesentlich größer als die Amplituden der beiden Echoimpulse E1 und E2.

Im in Figur 4 dargestellten Impulsdiagramm ist der zeitliche Verlauf der im Empfänger verstärkten, anschließend mittels des Bandpasses BP vorgefilterten und schließlich mittels des Gleichrichters G gleichgerichteten Meßimpulse M, E1, E2 und E3 dargestellt. Gleichrichtung und Bandfilterung sind nicht zwingend.

Das Impulsdiagramm der Figur 5 zeigt die Hüllkurven der Meßimpulse M, E1, E2 und E3.

Schließlich sind im Impulsdiagramm der Figur 6 der zeitliche Verlauf bzw. die Hüllkurven der Meßimpulse M, E1, E2 und E3 am Ausgang des Tiefpasses TP gezeigt. Durch die Tiefpaßfilterung mittels des Tiefpasses TP verschmelzen die beiden Echoimpulse E2 und E3 zu einem Echoimpuls EV, dessen Amplitude wesentlich größer ist als die des Echoimpulses E1.

Die Füllstandshöhe wird nun je nach dem Reflexionsvermögen des Füllgutes und der Behälterwand mittels des verschmolzenen Echoimpulses EV oder des Echoimpulses E3 ermittelt. Vorzugsweise werden in der Auswerteeinheit AW die steigenden Flanken der Amplituden ausgewertet. Mittels der Ausgabeeinheit AG wird die ermittelte Füllstandshöhe H optisch angezeigt.

Das erfindungsgemäße Füllstandsmeßgerät kann in analoger oder digitaler Technik ausgeführt sein. Die digitale Ausführung läßt sich, wie bereits erwähnt, durch Wahl der Grenzfrequenzen des digitalen Tiefpasses und durch unterschliedliche Auswertung der Meß- und Echoimpulse in einer digitalen Auswerteeinheit AW individuell an die spezifischen Reflexionseigenschaften des Füllgutes F und der Behälterwand BW anpassen. Das erfindungsgemäße Verfahren und Füllstandsmeßgerät sind insbesondere zur Messung des Füllstandes von Schüttgut in einem Behälter geeignet.

### Bezugszeichenliste

- A: Sende- und Empfangsantenne
- AD: Analog-Digital-Wandler
- AG: Ausgabeeinheit
- AW: Auswerteeinheit
- B: Behälter
- BP: Bandpaß
- BW: Behälterwand
- E: Empfänger
- EV: verschmolzener Echoimpuls
- E1: von der Behälterwand reflektierter Meßimpuls
- E2: von der Oberfläche des Füllgutes reflektierter Meßimpuls
- E3: von der Oberfläche des Füllgutes diffus und anschließend an der Behälterwand reflektierter Meßimpuls
- F: Füllgut
- G: Gleichrichter
- H: Füllstandshöhe
- M: ausgesendeter Meßimpuls
- O: Oberfläche des Füllgutes
- S: Sender
- SW: Schweißnaht
- TP: Tiefpaß

## Patentansprüche

1. Verfahren zur Füllstandsmessung mittels eines Füllstandsmeßgerätes, das Meßimpulse (M) auf die Oberfläche (O) eines in einen Behälter (B) gefüllten Füllgutes (F) sendet und die von der Oberfläche (O) des Füllgutes (F) reflektierten Meßimpulse (E2, E3), die sog. Echoimpulse, empfängt, um aus der Laufzeit der Meßimpulse (M, E1, E2, E3) den Füllstand (H) des Füllgutes (F) zu ermitteln,
**dadurch gekennzeichnet, daß** die empfangenen Meßimpulse (E1, E2, E3) mittels eines Tiefpasses (TP) gefiltert und anschließend ausgewertet werden.

2. Verfahren nach Anspruch 1,
**dadurch gekennzeichnet, daß** die von einer Sende- und Empfangsantenne (A) empfangenen Meßimpulse (E1, E2, E3) vor der Tiefpaßfilterung mittels des Tiefpasses (TP) mittels eines Bandpasses (BP) vorgefiltert werden.

3. Verfahren nach Anspruch 1 oder 2,
**dadurch gekennzeichnet, daß** die empfangenen Meßimpulse (E1, E2, E3) vor der Tiefpaßfilterung mittels des Tiefpasses (TP) mittels eines Gleichrichters (G) gleichgerichtet werden.

4. Verfahren nach Anspruch 1, 2 oder 3,
**dadurch gekennzeichnet, daß** die empfangenen Meßimpulse (E1, E2, E3) vor der Tiefpaßfilterung mittels des Tiefpasses (TP) mittels eine Analog-Digital-Wandlers (AD) digitalisiert werden.

5. Verfahren nach einem der Ansprüche 1-4,
**dadurch gekennzeichnet, daß** die Hüllkurven der Meßimpulse (M, E1, E2, E3) gebildet werden.

6. Verfahren nach Anspruch 4 oder 5,
**dadurch gekennzeichnet, daß** für den Tiefpaß (TP) ein digitales Filter vorgesehen wird.

7. Verfahren nach Anspruch 6,
**dadurch gekennzeichnet, daß** die Grenzfrequenz des digitalen Tiefpasses (TP) für steigende und fallende Amplituden gleich gewählt wird.

8. Verfahren nach Anspruch 6,
**dadurch gekennzeichnet, daß** die Grenzfrequenzen des digitalen Tiefpasses (TP) für fallende und steigende Amplituden unterschiedlich gewählt sind.

9. Verfahren nach einem der Ansprüche 1-8,
**dadurch gekennzeichnet, daß** in der Auswerteeinheit (AW) der an der Behälterwand (BW) reflektierte Meßimpuls, der Echoimpuls (E1) und der diffus von der Oberfläche (O) des Füllgutes (F) und anschließend an der Behälterwand (BW) reflektierte Meßimpuls, der Echoimpuls (E3), ausgewertet werden.

10. Verfahren nach einem der Ansprüche 1-8,
**dadurch gekennzeichnet, daß** in der Auswerteeinheit (AW) der an der Behälterwand (BW) reflektierte Meßimpuls, der Echoimpuls (E2), ausgewertet wird.

11. Verfahren nach einem der Ansprüche 1-10,
**dadurch gekennzeichnet, daß** bei der Auswertung der reflektierten Meßimpulse, der Echoimpulse (E2, E3), deren ansteigende Flanken ausgewertet werden.

12. Verfahren nach einem der Ansprüche 1-11,
**dadurch gekennzeichnet, daß** die von einer Sende- und Empfangsantenne (A) empfangenen Meßimpulse in einem Empfänger (E) verstärkt werden.

13. Verfahren nach einem der Ansprüche 1-12,
**dadurch gekennzeichnet, daß** für die ausgesendeten Meßimpulse (M) elektromagnetische Impulse oder Ultraschallimpulse vorgesehen werden.

14. Verfahren nach Anspruch 13,
**dadurch gekennzeichnet, daß** die Frequenz der elektromagnetischen Meßimpulse (M) im Mikrowellenbereich liegt.

15. Füllstandsmeßgerät zum Senden von Meßimpulsen (M) auf die Oberfläche (O) eines in einen Behälter (B) gefüllten Füllgutes (F), zum Empfang der von der Oberfläche (O) des Füllgutes (F) reflektierten Meßimpulse (E2, E3), der sog. Echoimpulse, und zur Bestimmung der Laufzeit der Meßimpulse (M, E1, E2, E3), um den Füllstand (H) des Füllgutes (F) im Behälter (B) zu ermitteln, wobei ein Meßimpulse (M) erzeugender Sender (S) und ein die reflektierten Meßimpulse (E1, E2, E3) empfangender Empfänger (E) an eine Sende- und Empfangsantenne (A) angeschlossen sind,
**dadurch gekennzeichnet, daß** der Ausgang des Empfängers (E) mit dem Eingang eines Tiefpasses (TP) verbunden ist, an dessen Ausgang der Eingang einer Auswerteeinheit (AW) angeschlossen ist, und daß der Ausgang der Auswerteeinheit (AW) mit dem Eingang einer Ausgabeeinheit (AG) verbunden ist.

16. Füllstandsmeßgerät nach Anspruch 15,
**dadurch gekennzeichnet, daß** zwischen dem Empfänger (E) und dem Tiefpaß (TP) ein Bandpaß (BP) vorgesehen ist.

17. Füllstandsmeßgerät nach Anspruch 15 oder 16,
**dadurch gekennzeichnet, daß** zwischen dem Empfänger (E) und dem Tiefpaß (TP) ein Gleichrichter (G) vorgesehen ist.

18. Füllstandsmeßgerät nach Anspruch 15, 16 oder 17,
**dadurch gekennzeichnet, daß** vor dem als digitales Filter ausgeführten Tiefpaß (TP) ein Analog-Digital-Wandler vorgesehen ist.

19. Füllstandsmeßgerät nach Anspruch 18,
**dadurch gekennzeichnet, daß** der Ausgang des Empfängers (E) mit dem Eingang des Bandpasses (BP) verbunden ist, dessen Ausgang mit dem Eingang des Gleichrichters (G) verbunden ist, und daß der Ausgang des Gleichrichters (G) mit dem Eingang des Analog-Digital-Wandlers (AD) verbunden ist, dessen Ausgang an den Eingang des digitalen Tiefpasses (TP) angeschlossen ist.

20. Füllstandsmeßgerät nach Anspruch 18 oder 19,
**dadurch gekennzeichnet, daß** die Grenzfrequenz des digitalen Tiefpasses (TP) für steigende und fallende Amplituden gleich oder unterschiedlich gewählt ist.

21. Füllstandsmeßgerät nach einem der Ansprüche 14-20,
**dadurch gekennzeichnet, daß** die ausgesendeten Meßimpulse (M) elektromagnetische Impulse oder Ultraschallimpulse sind.

22. Füllstandsmeßgerät nach Anspruch 21,
**dadurch gekennzeichnet, daß** die Frequenz der elektromagnetischen Meßimpulse (M) im Mikrowellenbereich liegt.
